# EUROPEAN PATENT SPECIFICATION

(11) **EP 1 250 550 B1**
(45) Date of publication and mention of the grant of the patent: **05.07.2006**
(21) Application number: 01906416.1
(22) Date of filing: 26.01.2001
(51) Int. Cl.: F16N 29/00, F16C 33/66

(54) **INTELLIGENT BEARING MAINTENANCE**
LAGERWARTUNG
MAINTENANCE INTELLIGENTE D'UN ROULEMENT

(30) Priority: 27.01.2000 NL 1014210
(43) Date of publication of application: 23.10.2002
(73) Proprietor: SKF Engineering & Research Centre B.V., 3430 DT Nieuwegein (NL)
(72) Inventor: HOLWEG, Eduardus, Gerardus, Maria, NL-2611 NJ Delft (NL); VAN WINDEN, Johannes, Albertus, 69120 Heidelberg (DE); DUITS, Johannes, Andrianus, Maria, NL-2411 ZK Bodegraven (NL)
(74) Representative: van Westenbrugge, Andries
(86) International application number: PCT/NL2001/000051
(87) International publication number: WO 2001/055634

(56) References cited:
- EP-A- 0 728 984
- EP-A- 0 933 581
- US-A- 4 527 661
- US-A- 4 796 204
- US-A- 4 862 393
- US-A- 5 711 615
- US-A- 5 929 336

## Description

The present invention relates to intelligent bearing maintenance, and more specifically to a method and system for determining a grease condition in a bearing, comprising the steps of measuring at least one operational parameter of the bearing.

The grease condition may e.g. be the grease service life, i.e. the remaining period in which the quality of the grease will be above a predetermined threshold.

In publication WO 94/21932, an anti-friction bearing with an external lubricant supply system is disclosed. The lubricant or grease is supplied directly into the region of the rolling element race in order to avoid spilling of lubricant which is characteristic for other lubricant spraying techniques. In the system known from WO 94/21932, a bearing is continuously provided with new grease in order to extend the service life of the bearing. The continuous provision of new grease may also be implemented semi-continuously, i.e. by periodically adding a predetermined quantity of new grease. The amount of grease that is (semi-)continuously supplied is determined in a control unit on the basis of a basic adjustment determined by basic operating parameters and modified as a function of measured operating parameters. The amount of grease supplied to the bearing is adjusted in a way, such that excessive wear of the bearing is prevented.

A disadvantage of this system is that by continuously (or semi-continuously) adding new grease to the bearing, a lot of grease is being unnecessarily wasted. In the known system, the condition of the grease is not determined. Usually, the condition of grease in a bearing can only be determined by taking samples of the grease and analysis of the grease.

The object of the present invention is to provide a non-invasive method and system for determining a grease condition in a bearing. This will allow use of the grease in a bearing until the condition of the grease falls below a predetermined threshold, leading to a much lower waste of grease.

This object is achieved by a method according to the preamble defined above, in which the method comprises the further step of determining the grease condition by inputting the measured at least one operational parameter into a model, the model interrelating the at least one operational parameter and the grease condition for a specific combination of a predetermined type of grease and a predetermined type of bearing. By using such a model interrelating an operational parameter and the grease condition for a specific combination of grease and bearing, an accurate determination of the condition of the grease in the bearing can be given, without taking samples of the grease in the bearing and analysing the samples.

In embodiments of the method according to the present application, the at least one operational parameter comprises one or more of the following parameters: the bearing temperature; the rotation speed and/or the load on the bearing. In general, higher values of these operational parameters tend to decrease the condition of the grease more rapidly. The accurate (multidimensional) relationship of these operational parameters and the condition of the grease is recorded in the model for a specific combination of a predetermined type of grease and a predetermined type of bearing.

Preferably, the model is an empirically determined model. Testing of samples of bearings occurs regularly in factories, and the data recorded during test may be used to empirically derive a model for a specific combination of type of grease and type of bearing. Especially, when the test is performed through all the service life of the grease and/or the bearing (i.e. until failure of the bearing), the model will be very accurate and complete.

In a preferred embodiment of the method according to the present invention, the method comprises the step of recording historical data concerning the at least one parameter and inputting the historical data into the model. This allows for a better matching of the historical data with the model, resulting in a more accurate determination of the grease condition.

In a further embodiment, the method according to the present invention comprises the further step of giving an indication of the grease condition. This can simply be implemented by providing e.g. a visual indication, either digitally (pass-fail) or on a graded scale (from fresh to worn out).

A method according to a further embodiment comprises the further step of adding grease to the bearing when the grease condition falls below a predetermined threshold. This allows for installing a bearing, which is virtually maintenance free (fit-and-forget), as fresh grease will be added in time to prevent excessive wear of the bearing.

A second aspect of the present invention relates to using a bearing comprising at least one sensor for measuring an operational parameter and a processing unit arranged to implement the method according to the present invention. Preferably, the processing unit is integrated in the bearing. By integrating the processing unit in the bearing, the signal paths from the at least one sensor to the processing unit will be small, and hence the signal is less vulnerable to environmental distortions. Also, this embodiment will save space for installation.

Preferably, the bearing further comprises power supply means driven by rotation of the bearing for generating a supply power, e.g. for the processing unit and the at least one sensor. This internal power generation arrangement allows for stand-alone operation of the bearing with integrated sensor(s) and processing unit. This may be advantageous when the bearing is to be installed in an environment that is not easily accessible, or where supplying power to the processing unit and bearing by means of wires is difficult or cumbersome.

In an embodiment, the bearing further comprises grease pump means connected to the processing unit for applying new grease to the bearing in response to the present grease condition. The processing unit may be arranged to control the grease pump means such that new grease is only applied when needed, e.g. when the grease condition falls below a predetermined quality threshold. This embodiment allows a bearing to be installed once, without having to check the condition of the grease in the bearing at regular maintenance intervals. Preferably the processing unit is arranged to keep record of the amount of new grease supplied to the bearing. In case that the grease pump is supplied with grease from a reservoir, it is possible to generate a warning when the reservoir is almost empty.

In a particular advantageous embodiment, the bearing according the present invention further comprises transmission means, connected to the processing unit, for exchange of data. Preferably, the data is read out remotely, e.g. by IR or RF transmission. This allows reading out data concerning the bearing, e.g. the grease condition, rotations made, historical data of the at least one operational parameter (temperature, speed and load profile). A maintenance technician is then able to remotely read out service data from the bearing, without having to actually inspect the bearing (visually or even by dismounting the bearing).

A further embodiment of the bearing according to the present invention further comprises a vibration sensor operationally coupled to the bearing and supplying a vibration sensor signal to the processing unit. The data supplied by the vibration sensor can be analysed by the processing unit in order to detect early defects in the bearing or parts of the bearing (condition monitoring). Again, providing short signal paths between the vibration sensor and the processing unit will make the data signal less vulnerable to environmental distortions.

The present invention will now be described in more detail in relation to preferred embodiments of the present invention, with reference to the accompanying drawings, in which:
Fig. 1 shows a schematic representation of a bearing according to a first embodiment of the present invention;
Fig. 2 shows a number of graphs illustrating the condition of grease in a bearing as function of time for a number of temperature values;
Fig. 3 shows a schematic representation of a bearing according to a second embodiment of the present invention.

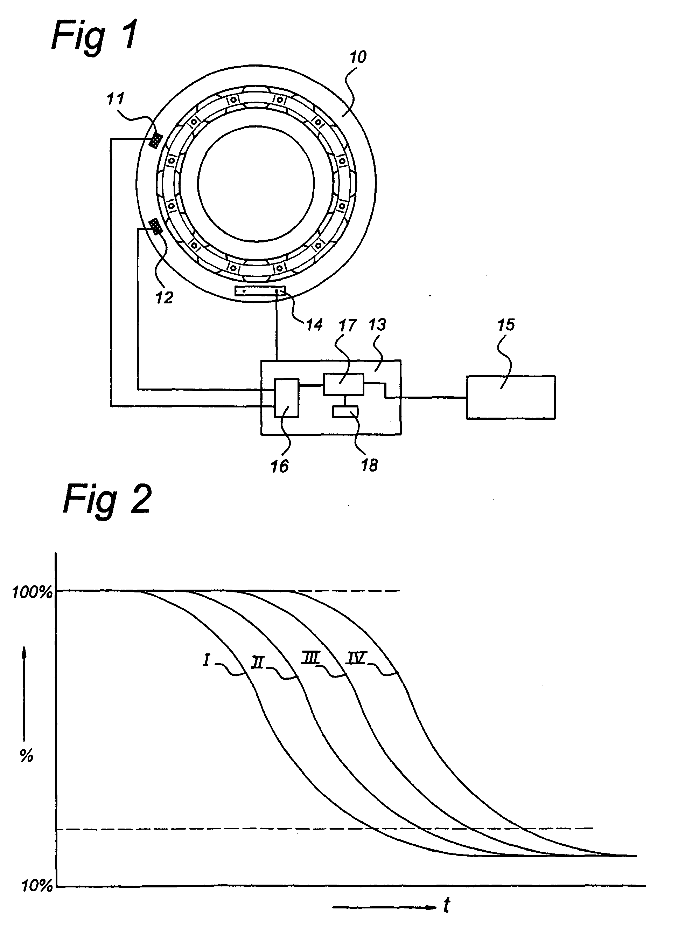

Fig. 1 shows a schematic representation of a bearing 10, which may be a ball bearing or any type of bearing in which grease or lubricant is used to enable rotation of the bearing parts. The bearing 10 comprises a temperature sensor 11 for sensing the temperature of the bearing. Preferably, the temperature sensor 11 is located as close as possible to the area of the bearing 10 where the grease is located. Furthermore, the bearing comprises a speed sensor 12 for measuring the rotational speed of the bearing 10. Both the temperature sensor 11 and speed sensor 12 are connected by means of signal leads to a processing unit 13.

The processing unit 13 comprises the means necessary for analysis purposes, i.e. sensor interface circuitry 16, calculating means 17 and memory means 18.

The processing unit 13 may be supplied with supply power from an integrated power generator 14, which generates power when the bearing 10 rotates. For this, generally known systems may be used that transform a rotational movement in electrical power, such as a combination of permanent magnets and coils. This internal power generator 14 allows for stand-alone operation of the bearing 10 with integrated sensor(s) 11, 12 and processing unit 13. This may be advantageous when the bearing 10 is to be installed in an environment that is not easily accessible, or where supplying power to the processing unit 13 and/or sensors 11, 12 by means of wires is difficult or cumbersome. Of course, the processing unit 13 may be supplied with other means for supplying power, such as a battery or an external power supply.

In the embodiment shown, the processing unit 13 is connected to indicator means 15, for indicating the condition of the grease in the bearing 10. These indicator means 15 may be implemented by a number of lights, e.g. a green light for a good condition, a yellow light for a deteriorated condition and a red light for a bad condition of the grease in the bearing 10. As an alternative a generally available scale indication instrument may be used, rendering a scaled indication of the condition of the grease.

The processing unit 13 is arranged to process the data from the temperature and speed sensor 11, 12, to determine the condition of grease in the bearing 10. This is implemented by inputting the data from the temperature and speed sensor 11, 12 into a model that interrelates at least one operational parameter, such as temperature or speed, and the grease condition for a specific combination of a predetermined type of grease and a predetermined type of bearing 10. This model is preferably an empirically determined model, comprising data from operational tests at the bearing factory. The model data may be stored in the memory means 18 of the processing unit 13.

In a preferred embodiment, the temperature sensor 11, speed sensor 12, processing unit 13, power generation means 14 and indication means 15 are all integrated on the bearing 10. This will allow a stand-alone application of the integrated bearing 10. Also, it will allow short signal paths from the temperature and speed sensor 11, 12 to the processing unit 13, making the arrangement less vulnerable to environmental distortions.

Fig. 2 shows a simplified model of the interrelationship of the condition of the grease (or grease service life) expressed in percentage as a function of time, for different (constant) operating temperatures of the bearing 10. In Fig. 2, four different graphs I..IV are given for respective decreasing operational temperatures of the bearing. For a specific combination of type of grease and type of bearing 10, the condition of the grease will start at 100 % and initially, the condition will only gradually decrease as function of time. At a certain moment in time, the condition of the grease will start to deteriorate faster, and ultimately, the grease falls below a certain condition threshold, e.g. 10 %. For a higher operating temperature of the bearing 10, the condition of the grease will start to deteriorate at an earlier instant than for lower temperatures, and the slope of the graph may be different.

The graphs I..IV shown in Fig. 2 are only a subset of the data comprised in the model. The model will comprise a full interrelationship of the condition of the grease as a function of operating temperature and time. Preferably, the model will be established for a specific combination of type of grease and type of bearing. This may be accomplished in factory testing, where the full spectrum of condition of the grease may be monitored for the specific combination.

The model for a specific combination of type of grease and type of bearing may be multi-dimensional, i.e. next to temperature dependence it may comprise interrelationships for other operational parameters, such as rotational speed and/or bearing load. Operating at higher rotational speed of the bearing 10 will in general lead to a faster deterioration of the grease condition. Also, a heavier load on the bearing, possibly also dependent on the type of load (axial, transverse, ...), will have an effect on the condition of the grease.

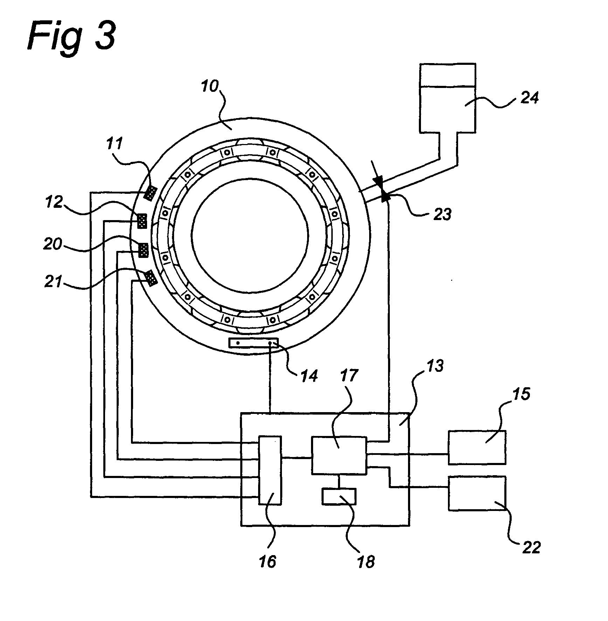

Fig. 3 shows a schematic representation of a further embodiment of the bearing 10 according to the present invention. In Fig. 3, elements already discussed with reference to Fig. 1 have the same reference numerals. Furthermore, the bearing 10 is provided with a load sensor 20, connected to the interface means 16 of the processing unit 13. This allows inputting load data of the bearing 10 into the model to determine the condition of the grease.

Furthermore, the bearing 10 is provided with a vibration sensor 21 to sense vibrations in the bearing parts. Data from the vibration sensor 21 is input to the processing unit 13 for analysis. This vibration analysis may provide indications of excessive wear of the bearing 10 or early indications of defects in the bearing 10.

In this embodiment, transmission means 22 are provided, connected to the processing unit 13. Preferably, these transmission means 22 enable wireless transmission of data to and from the processing unit 13, and are also preferably integrated on the bearing 10. These transmission means 22 may e.g. be used to remotely read out data form the processing unit 13, such as the condition of the grease, or other operational data stored in the memory means 18, such as number of rotations made, temperature profile, and speed profile. This arrangement allows a maintenance technician to remotely monitor a bearing 10, e.g. a bearing 10 which is installed in a place which complicates visual inspection.

The processing unit 13 is preferably arranged to store historical data from the various sensors 11, 12, 20, 21 for the bearing 10. On the one hand it may be necessary to input this historical data into the model to obtain a more accurate determination of the condition of the grease. On the other hand, the historical data may be valuable for later analysis or for maintenance purposes.

Furthermore, the bearing 10 of the embodiment shown in Fig. 3 is provided with a grease supply system, comprising a grease reservoir 24 and a grease supply valve 23. The grease supply valve 23 is controlled by the processing unit 13. The processing unit 13 may be arranged to control the grease supply valve such that a predetermined amount of new grease is supplied to the bearing 10, when the condition of the grease falls below a predetermined threshold. This embodiment allows a bearing 10 to be installed once, without having to check the condition of the grease in the bearing 10 at regular maintenance intervals. Preferably the processing unit is arranged to keep record of the amount of new grease supplied to the bearing 10. In case that the bearing 10 is supplied with grease from the grease reservoir 24, it is possible to generate a warning when the grease reservoir 24 is almost empty.

For the person skilled in the art it will be clear that the above described embodiments are only exemplary. It is possible to utilise a smaller or larger number of sensors 11, 12, 20, 21, and it is possible to use only a subset of the data from the sensors as input to the model. The indication means 15, transmission means 22 and grease supply system 23, 24 may be used in combination or independently.

The scope of protection of the present application is not deemed to be limited by the exemplary embodiments shown, but is defined in the accompanying claims.

## Claims

1. Method for determining a grease condition in a bearing, comprising the steps of measuring at least one operational parameter of the bearing;
**characterised in that** the method comprises the further step of determining the grease condition, the grease condition being a remaining grease service life, by inputting the measured at least one operational parameter into a model, the model being an implementation of a mathematical relationship interrelating the at least one operational parameter and the grease condition for a specific combination of a predetermined type of grease and a predetermined type of bearing (10).

2. Method according to claim 1, in which the at least one operational parameter comprises the bearing temperature.

3. Method according to claim 1 or 2, in which the at least one operational parameter comprises the rotational speed of the bearing (10).

4. Method according to claim 1, 2 or 3, in which the at least one operational parameter comprises the load on the bearing (10).

5. Method according to one of the preceding claims, in which the model is an empirically determined model.

6. Method according to one of the preceding claims, in which the method comprises the step of recording historical data concerning the at least one parameter and inputting the historical data into the model.

7. Method according to one of the preceding claims, in which the method comprises the further step of giving an indication of the grease condition.

8. Method according to one of the preceding claims, in which the method comprises the further step of adding grease to the bearing when the grease condition falls below a predetermined threshold.

9. Use of a bearing (10) comprising at least one sensor (11; 12; 20; 21) for measuring an operational parameter and a processing unit (13), the processing unit (13) comprising calculating means (17), memory means (18) connected to the calculating means (17), and sensor interface circuitry (16) connected to the calculating means (17) for connecting the at least one sensor (11; 12; 20; 21), in which the calculating means (17) and memory means (18) are arranged to implement the method according to one of the claims 1 through 8.

10. Use of a bearing according to claim 9, in which the processing unit (13) is integrated in the bearing (10).

11. Use of a bearing according to claim 9 or 10, further comprising power supply means (14) driven by rotation of the bearing (10) for generating a supply power.

12. Use of a bearing according to claim 9,10 or 11, further comprising grease pump means (23,24) connected to the processing unit (13) for applying new grease to the bearing (10) in response to the present grease condition.

13. Use of a bearing according to one of the claims 9 through 12, further comprising transmission means (22), connected to the processing unit (13) for exchange of data.

14. Use of a bearing according to one of the claims 9 through 13, further comprising a vibration sensor (21) operationally coupled to the bearing(10) and supplying a vibration sensor signal to the processing unit (13).

## Patentansprüche

1. Verfahren zur Bestimmung des Zustandes des Schmierfetts in einem Lager, das den Schritt des Erfassens wenigstens eines Betriebsparameters des Lagers umfaßt, **dadurch gekennzeichnet, daß** das Verfahren den weiteren Schritt des Bestimmens des Schmierfettzustandes, wobei der Schmierfettzustand eine verbleibende Schmierfettstandzeit darstellt, durch Eingeben des gemessenen wenigstens einen Betriebsparameters in ein Modell umfaßt, wobei das Modell eine Umsetzung einer mathematischen Beziehung darstellt, die den wenigstens einen Betriebsparameter und den Schmierfettzustand für eine bestimmte Kombination aus einer vorbestimmten Art von Schmierfett und einer vorbestimmten Art von Lager (10) in eine gegenseitige Beziehung bringt.

2. Verfahren nach Anspruch 1, bei welchem der wenigstens eine Betriebsparameter die Lagertemperatur umfaßt.

3. Verfahren nach Anspruch 1 oder 2, bei welchem der wenigstens eine Betriebsparameter die Drehzahl des Lagers (10) umfaßt.

4. Verfahren nach Anspruch 1, 2 oder 3, bei welchem der wenigstens eine Betriebsparameter die Last auf das Lager (10) umfaßt.

5. Verfahren nach einem der vorhergehenden Ansprüche, bei welchem das Modell ein empirisch bestimmtes Modell ist.

6. Verfahren nach einem der vorhergehenden Ansprüche, bei welchem das Verfahren den Schritt eines Aufzeichnens historischer Daten betreffend den wenigstens einen Parameter und eines Eingebens der historischen Daten in das Modell umfaßt.

7. Verfahren nach einem der vorhergehenden Ansprüche, bei welchem das Verfahren den weiteren Schritt eines Anzeigens des Schmiermittelzustandes umfaßt.

8. Verfahren nach einem der vorhergehenden Ansprüche, bei welchem das Verfahren den weiteren Schritt des Hinzufügens von Schmierfett zu dem Lager umfaßt, wenn der Schmierfettzustand unter einen vorbestimmten Schwellenwert fällt.

9. Verwendung eines Lagers (10), das wenigstens einen Sensor (11; 12; 20; 21) zum Messen eines Betriebsparameters und eine Datenverarbeitungseinheit (13) aufweist, wobei die Datenverarbeitungseinheit (13) einen Rechner (17), einen Speicher (18), der mit dem Rechner (17) verbunden ist, und eine Sensorschnittstelle (16) umfaßt, die zum Anschließen des wenigstens einen Sensors (11; 12; 20; 21) mit dem Rechner (17) verbunden ist, wobei der Rechner (17) und der Speicher (18) zur Durchführung des Verfahrens nach einem der Ansprüche 1 bis 8 ausgebildet sind.

10. Verwendung eines Lagers nach Anspruch 9, bei welchem die Datenverarbeitungseinheit (13) in das Lager (10) integriert ist.

11. Verwendung eines Lagers nach Anspruch 9 oder 10, das weiterhin eine Stromversorgung (14) aufweist, die durch die Rotation des Lagers (10) zum Erzeugen von Versorgungsstrom angetrieben wird.

12. Verwendung eines Lagers nach Anspruch 9, 10 oder 11, das weiterhin eine Schmierfettpumpe (23, 24) aufweist, die mit der Datenverarbeitungseinheit (13) in Verbindung steht, um frisches Schmierfett in Abhängigkeit von dem gegenwärtigen Schmierfettzustand in das Lager (10) einzubringen.

13. Verwendung eines Lagers nach einem der Ansprüche 9 bis 10, das weiterhin Übertragungsmittel (22) aufweist, die zum Austausch von Daten mit der Datenverarbeitungseinheit (13) in Verbindung stehen.

14. Verwendung eines Lagers nach einem der Ansprüche 9 bis 13, das weiterhin einen Vibrationssensor (21) aufweist, der funktional mit dem Lager (10) gekoppelt ist und ein Vibrationssensorsignal an die Datenverarbeitungseinheit (13) abgibt.

## Revendications

1. Procédé pour déterminer l'état de graissage d'un roulement, comprenant les étapes de mesure d'au moins un paramètre fonctionnel du roulement ;
**caractérisé en ce que** le procédé comprend l'étape supplémentaire de détermination de l'état de graissage, l'état de graissage étant une durée de vie de graisse restante, en entrant ledit au moins un paramètre fonctionnel mesuré dans un modèle, le modèle étant une implémentation d'une relation mathématique qui établit une relation entre ledit au moins un paramètre fonctionnel et l'état de graissage pour une association spécifique d'un type de graisse prédéterminé et d'un type de roulement prédéterminé (10).

2. Procédé selon la revendication 1, dans lequel ledit au moins un paramètre fonctionnel comprend la température du roulement.

3. Procédé selon la revendication 1 ou 2, dans lequel ledit au moins un paramètre fonctionnel comprend la vitesse de rotation du roulement (10).

4. Procédé selon la revendication 1, 2 ou 3, dans lequel ledit au moins un paramètre fonctionnel comprend la charge exercée sur le roulement (10).

5. Procédé selon l'une des revendications précédentes, dans lequel le modèle est un modèle déterminé de façon empirique.

6. Procédé selon l'une des revendications précédentes, dans lequel le procédé comprend l'étape consistant à enregistrer des données historiques concernant ledit au moins paramètre et à entrer ces données historiques dans le modèle.

7. Procédé selon l'une des revendications précédentes, dans lequel le procédé comprend l'étape supplémentaire consistant à donner une indication de l'état de graissage.

8. Procédé selon l'une des revendications précédentes, dans lequel le procédé comprend l'étape supplémentaire consistant à ajouter de la graisse au roulement quand l'état de graissage descend sous un seuil prédéterminé.

9. Utilisation d'un roulement (10) comprenant au moins un capteur (11 ; 12 ; 20 ; 21) pour mesurer un paramètre fonctionnel et une unité de traitement (13), l'unité de traitement (13) comprenant un moyen de calcul (17), un moyen de mémoire (18) connecté au moyen de calcul (17), et des circuits d'interface de capteur (16) connectés au moyen de calcul (17) pour connecter ledit au moins un capteur (11 ; 12 ; 20 ; 21), dans laquelle le moyen de calcul (17) et le moyen de mémoire (18) sont adaptés pour implémenter le procédé de l'une des revendications 1 à 8.

10. Utilisation d'un roulement selon la revendication 9, dans laquelle l'unité de traitement (13) est intégrée au roulement (10).

11. Utilisation d'un roulement selon la revendication 9 ou 10, comprenant en outre un moyen d'alimentation électrique (14) entraîné par la rotation du roulement (10) pour produire une puissance d'alimentation.

12. Utilisation d'un roulement selon la revendication 9, 10 ou 11, comprenant en outre un moyen formant pompe à graisse (23, 24) connecté à l'unité de traitement (13) pour appliquer de la graisse neuve au roulement (10) en réponse à l'état de graissage courant.

13. Utilisation d'un roulement selon l'une des revendications 9 à 12, comprenant en outre un moyen de transmission (22), connecté à l'unité de traitement (13) pour permettre l'échange de données.

14. Utilisation d'un roulement selon l'une des revendications 9 à 13, comprenant en outre un capteur de vibrations (21) couplé fonctionnellement au roulement (10) et qui fournit un signal de capteur de vibrations à l'unité de traitement (13).
